# EUROPÄISCHE PATENTSCHRIFT

(11) **EP 0 730 011 B1**
(45) Veröffentlichungstag und Bekanntmachung des Hinweises auf die Patenterteilung: **09.12.1998**
(21) Anmeldenummer: 96102438.7
(22) Anmeldetag: 19.02.1996
(51) Int. Cl.: C09D 4/06

(54) **UV-härtbare Kratzfestlacke mit einpolymerisierendem Verdicker**
Scratch-resistant, UV-curable coating containing a copolymerizable thickener
Revêtement résistant aux rayures, polymérisable aux U.V. et contenant un agent épaississant polymérisable

(30) Priorität: 02.03.1995 DE 19507174
(43) Veröffentlichungstag der Anmeldung: 04.09.1996
(73) Patentinhaber: Röhm GmbH, 64293 Darmstadt (DE)
(72) Erfinder: Brehm, Manfred, Dr., D-63743 Aschaffenburg (DE); Neeb, Rolf, 64319 Pfungstadt (DE); Scharnke, Wolfgang, D-64283 Darmstadt (DE); Kerscher, Volker, Dr., D-64354 Reinheim (DE)

(56) Entgegenhaltungen:
- EP-A- 0 021 369
- EP-A- 0 035 272
- EP-A- 0 486 278
- FR-A- 2 278 726
- US-A- 4 803 026

## Beschreibung

### Gebiet der Erfindung

Die Erfindung betrifft das Gebiet der UV-härtenden, kratzfesten Überzüge für Kunststoffe insbesondere Kratzfestlacke mit einpolymerisierenden Verdickern sowie Verfahren zur Herstellung von kratzfesten Überzügen unter Verwendung dieser Lacke.

### Stand der Technik

Naturgemäß erreichen thermoplastisch verformbare Kunststoffe nicht die Kratzfestigkeit der meisten Metalle oder Mineralgläser. Besonders nachteilig macht sich die Anfälligkeit gegenüber Verkratzen bei transparenten Kunststoffen bemerkbar, da die betreffenden Gegenstände sehr schnell unansehnlich werden. Es wurden daher zahlreiche Verfahren entwickelt, um solche Kunststoffe mit kratzfesten Schichten zu versehen.

Als Beschichtungsmaterialien werden bevorzugt härtbare Kunststoffharze verwendet. Genannt seien beispielsweise Beschichtungen mit Polyvinylaldehyden oder Polyestern mit einem Dialdehyd (z.B. US-A-3 484 157), Polyurethanen (z.B. DE-OS 26 11 782), mit Alkyltitanat (z.B. US-A-3 700 487), Melamin in den verschiedensten Variationen oder Melamin-Polyol (z.B. GB-A-1 308 697, US-A-3 862 261).

Weiter sind Acrylharze der verschiedensten Arten (z.B. DE 23 17 874), fluorierte Kohlenwasserstoffe in den verschiedensten Kombinationen und Modifikationen (NL-OS 6608 316, DE-OS 19 63 278, DE-OS 24 54 076), vernetzte Polyalkyleniminverbindungen (US-A-3 766 299) und Siliciumverbindungen, insbesondere Silikonharze (z.B. BE-A-821 403, US-A-3 451 838, US-A-3 707 397) zur Beschichtung herangezogen worden.

EP-A1 180 129 beschreibt ein Verfahren zur Beschichtung von Kunststoffen mit Kratzfest- und Antireflexwirkung bestehend aus Acrylat- oder Methacrylatpolymeren, Silicium-organischen Polymerisaten oder Melaminharzen.

Handelsübliche Kratzfestbeschichtungen setzen sich aus mehreren Komponenten zusammen. Mehrfunktionelle Acrylate bilden mit einem Anteil von üblicherweise > 60 Gew.-% die eigentliche Matrix des Kratzfestlacks.

Meist werden zusätzlich bis etwa 20 Gew.-% sogenannter Verdicker eingesetzt, die ebenfalls in die Matrix einpolymerisiert werden. Hierbei handelt es sich meist um oligomere Epoxy-, Ether- oder Ester- und/oder Urethan(meth)acrylate oder Mischungen derselben.

Die Verdicker besitzen in der Regel ein höheres Molekulargewicht von ca. 500 - 10.000 als die mehrfunktionellen Acrylate, deren Molekulargewicht in der Regel zwischen 250 und 500 liegt. Verdicker werden in erster Linie verwendet um die Viskosität des Lackes zu erhöhen und um den bei der Polymerisation eintretenden Lackschrumpf zu mindern. Darüberhinaus sind sie weniger flüchtig als die mehrfunktionelle Acrylate was vorteilhaft in Bezug auf den Arbeitsschutz und das Ausdampfen von Restmonomeren aus dem polymerisierten Lack ist.

Zum Ausgleich der Verdickerwirkung und zum Einstellen der gewünschten Lackviskosität werden in der Regel Verdünner verwendet. Hierbei kann es sich um organische Lösungsmittel und/oder monofunktionelle Verbindungen z.B. auf Acrylat- oder Methacrylatbasis handeln. Letztere werden auch als Reaktiwerdünner bezeichnet, weil sie beim Aushärten des Lackes in die Lackmatrix einpolymerisieren können.

Durch die Kombination von Verdicker und Verdünner treten häufig synergistische Wirkungen, wie z.B. gute Verlaufseigenschaften des Lackes, ein.

Die Verwendung von oligomeren Epoxy-, Ether- oder Ester- und/oder Urethan(meth)acrylaten oder Mischungen derselben als Verdicker sind seit langem bekannt. Eine aktuelle und umfassende Zusammenstellung findet sich z.B. in "Allen et al. (1991): Chemistry & Technology of UV & EB Formulation For Coatings, Inks and Paints, Vol. 2: Prepolymers and Reactive Diluents for UV & EB Curable Formulations, Oldring P.K.T. (Herausg.), SITA Technlogy Ltd, London". Insbesondere die Epoxy-, Ether- und Ester- (meth)acrylate aber auch die Urethan(meth)acrylate zeigen in der Praxis den Nachteil einer schlechten Langzeitwitterungsbeständigkeit. Häufig werden die Kunststoffoberflächen nach einiger Zeit gelblich oder bräunlich oder auch matt oder rissig. Dies ist insbesondere bei transparenten als auch bei hell gefärbten Kunststoffkörpern von Nachteil.

Es wäre daher wünschenswert über Verdicker mit besserer Witterungsbeständigkeit, wie sie z.B. Homo- oder Copolymere von Alkylacrylaten oder Alkylmethacrylaten aufweisen, zu verfügen.

Der Verwendung von Homo- oder Copolymeren von Alkylacrylaten oder Alkylmethacrylaten in Beschichtungsmitteln stehen jedoch eine Reihe von Problemen entgegen.

Ein Nachteil liegt in der schlechten Löslichkeit von Alkylacrylat- bzw. Alkylmethacrylat-Polymeren beim Vermischen mit den übrigen Komponenten der Beschichtungsmittel, was zu langen Anlagenbelegungszeiten führt.

Zum anderen kann es bereits ab Zugabemengen von wenigen Prozent zu Trübungen in den ausgehärteten Schichten aufgrund der Unverträglichkeit mit der hochvernetzten Matrix kommen.
Die Polymermoleküle lagern sich bevorzugt aneinander, was zu einer ungleichmäßigen Verteilung (Inselbildung) und damit einer Verschlechterung der optischen Eigenschaften der Beschichtung führt. Liegen diese "Polymerinseln" an der Oberfläche, so können sie bei Belastung durch Kratzen aus der Matrix herausgerissen werden. Die Schicht ist nicht mehr an allen Stellen gleichmäßig kratzfest.

EP 035 272 B1 beschreibt die Verwendung von Polymeren auf Alkylmethacrylat- oder Alkylacrylatbasis als Zusatz in Beschichtungsmitteln zur Erzeugung kratzfester Schichten. Die Polymere dienen dabei vor allem zur Dispergierung von hohen Mengen UV-Absorber (5 - 35 Gew.-%), die ohne den Polymerzusatz nicht ohne nachteilige Effekte möglich wären. Als obere Mengengrenze für den Zusatz der Polymere werden 8 Gew.-% genannt. Oberhalb dieser Menge bewirken die Polymere eine Verschlechterung der Verlaufseigenschaften und der Kratzfestbeständigkeit.

### Aufgabe und Lösung

Die Aufgabe der vorliegenden Erfindung war es, ein Beschichtungsmittel für Kratzfestbeschichtung von Kunststoffkörpern zu entwickeln, in dem witterungsbeständige Polymere auf Alkylacrylat- oder Alkylmethacrylat-Basis als Verdicker verwendet werden können, ohne daß Trübungen auftreten oder die Kratzfesteigenschaften beeinträchtigt werden.

Die Aufgabe wurde gelöst durch ein Beschichtungsmittel für Kratzfestbeschichtungen von Kunststoffkörpern bestehend aus
(1) 1 - 30 Gew.-% eines einpolymerisierbaren Präpolymerisats als Verdicker
(2) 20 - 80 Gew.-% mehrfunktioneller Acrylate und/oder mehrfunktioneller Methacrylate
(3) 5 - 75 Gew.-% eines Verdünners
(4) 0,01 - 10 Gew.-% eines UV-Initiators
(5) 0 - 20 Gew.-% üblicher Additive, insbesondere UV-Absorber
dadurch gekennzeichnet, daß
das Präpolymerisat (1) durch radikalische Polymerisation von
(a) 90 bis 99 Gew.-% C₁ - bis C₈-Alkylestern der Acryl- oder Methacrylsäure und
(b) 1 bis 10 Gew.-% eines Schwefelreglers mit mindestens drei Thiol-Gruppen
erhalten wird.

Durch die Verwendung eines mindestens drei Thiol-Gruppen haltigen Schwefelreglers für das Polymer wird gewährleistet, daß mindestens eine freie Thiol-Gruppe vorhanden ist, da aus sterischen Gründen bei der Herstellung des Polymeren in Standardpolymerisationsverfahren im Mittel nur zwei der Thiol-Gruppen mit den Alkylacrylaten bzw. Alkylmethacrylaten reagieren. Da jedoch bei der Polymerisation des auf dem Kunststoffkörper in sehr dünner Schicht aufgetragenen Beschichtungsmittels unter UV-Strahlung sehr hohe Radikalkonzentrationen entstehen, kann die freie SH-Gruppe unter diesen Bedingungen mit den übrigen vernetzenden Monomeren reagieren. Es kommt zur Einpolymerisation des polymeren Verdickers in die Matrix der Kratzfestbeschichtung. Dies ermöglicht das Polymer in vergleichsweise hohen Mengen einzusetzen, ohne daß es nach der Polymerisation zu Trübungen oder Beeinträchtigungen der Kratzfestigkeit kommt.

Durch seine freie(n) Thiol-Gruppe(n) besitzt das Polymere gegenüber reinen Homo- oder Copolymeren von Alkylacrylaten oder Alkylmethacrylaten eine verbesserte Löslichkeit. Dadurch ergeben sich kürzere Anlagenbelegungszeiten bei der Herstellung des Beschichtungsmittels. Gegenüber Beschichtungsmitteln mit herkömmlichen Verdickern wurden deutlich verbesserte Langzeitbewitterungseigenschaften der ausgehärteten Kratzfestschichten erhalten. Als unerwarteter Effekt konnte festgestellt werden, daß der Abbau von im Beschichtungsmittel vorhandenen UV-Absorbern nach der Aushärtung der Kratzfestbeschichtung deutlich langsamer erfolgt als in konventionellen Beschichtungsmitteln.

### Ausführung der Erfindung

Ein erfindungsgemäßes Beschichtungsmittel, hier auch als Kratzfestlack bezeichnet, wird durch Mischen der folgenden Komponenten hergestellt:
(1) 1 - 30 Gew.-% eines einpolymerisierbaren Präpolymerisats als Verdicker
(2) 20 - 80 Gew.-% mehrfunktioneller Acrylate und/oder mehrfunktioneller Methacrylate
(3) 5 - 75 Gew.-% eines Verdünners
(4) 0,01 - 10 Gew.-% eines UV-Initiators
(5) 0 - 20 Gew.-% üblicher Additive, insbesondere UV-Absorber

### (1) Einpolymerisierbares Präpolymerisat als Verdicker

Erfindungsgemäß einpolymerisierbare Präpolymerisate sind wesentlicher Bestandteil der Erfindung. Sie können in an sich bekannter Weise durch radikalische Polymerisation von handelsüblichen, mindestens drei Thiolgruppen pro Molekül enthaltenden Schwefelreglern mit C₁- bis C₈-Alkylestern der Acryl- und/oder der Methacrylsäure erhalten werden. Die Verwendungsmengen für das Präpolymerisat im Beschichtungsmittel betragen 1 bis 30 Gew.-%.

Beispiele für die C₁- bis C₈-Alkylester der Acrylsäure bzw. der Methacrylsäure sind Methylacrylat, Ethylacrylat, Propylacrylat, Isopropylacrylat, n-Butylacrylat, Isobutylacrylat, n-Hexylacrylat und 2-Ethylhexylacrylat, Methylmethacrylat, Ethylmethacrylat, n-Propylmethacrylat und Butylmethacrylat. Bevorzugte Monomere sind Methylmethacrylat und n-Butylacrylat.

Schwefelregler mit mehr als zwei Thiolgruppen im Molekül sind z.B. aus US 4 521 567 bekannt. Zur Ausführung der Erfindung werden Schwefelregler mit mindestens drei, vorzugsweise vier Thiolgruppen im Molekül verwendet. Die Schwefelregler enthalten mindestens 3, vorzugsweise mindestens 6 Kohlenstoffatome im Molekül, jedoch nicht über 40. Vorteilhaft ist die Anwesenheit eines oder vorzugsweise mehrerer α-Mercapto-carbonsäureester-Gruppen im Molekül, vorzugsweise ausgehend von Polyolen, wie Glycerin oder Pentaerythrit. Geeignete Schwefelregler mit mehr als drei Thiolgruppen sind z.B. 1,2,6-Hexantriol-trithioglycolat, Trimethylolethan-trithioglycolat, Pentaerythritol- tetrakis-(2-mercaptoacetat), Trimethylolethan-tri-(3-mercaptopropionat), Pentaerythritol-tetrakis-(3-mercaptopropionat), Trimethylolpropan-trithioglycolat, Trimethylolpropan-tri-(3-mercaptopropionat), Tetrakis-(3-mercaptopropionat)-Pentaerytritol, 1,1,1-Propanetriyl-tris-(mercaptoacetat), 1,1,1-Propanetriyl-tris-(3-mercaptopropionat), Dipentaerythritol-hexa-(3-mercatopropionat). Gut geeignet ist insbesondere das Pentaerythritol- tetrakis-(2-mercaptoacetat) (Pentaerythrittetrathioglycolat).

Bei der Herstellung der verdickenden Polymeren können die Verhältnisse von Regler zu Monomeren variiert werden. Bevorzugt werden z.B. Methylmethacrylat-Anteile von 50 - 99 Gew.-%, Butylmethacrylatanteile von 5 bis 40 Gew.-% und Acrylatanteile von 2 bis 50 Gew.-%. Die Regler können in Konzentrationen von 1 bis 10 Gew.-% eingesetzt werden, günstig sind z.B. 2 bis 6 Gew.-%. Ein besonders geeigneter Regler ist das Pentaerythrittetrathioglycolat.
Die Polymerisation von Reglern und Monomeren kann in an sich bekannter Weise als Substanz-, Suspensions- oder Perl-, Lösungs- oder Emulsionspolymerisation mit Hilfe von Radikalstartern durchgeführt werden. Beispielweise kann aus DE 33 29 765 C2/ US 4 521 567 ein geeignetes Verfahren zur Perlpolymerisation (Polymerisationsschritt Stufe A) entnommen bzw. abgeleitet werden.

Als Radikalstarter kommen z.B. peroxidische oder Azoverbindungen in Frage (US-A-2 471 959). Genannt seien z.B. organische Peroxide wie Dibenzoylperoxid, Laurylperoxid oder Perester wie tert.-Butly-per-2-ethylhexanoat, ferner Azoverbindungen wie Azobisisobutyronitril. Die erhaltenen Verdicker-Polymere können je nach Polymerisationsverfahren und Regleranteil Molekulargewichte von ca. 2000 bis 50.000 aufweisen. Es wird vermutet, daß aus sterischen Gründen bei der Herstellung der Polymeren von den vorhandenen Thiol-Gruppen der Regler im Mittel nur zwei umgesetzt werden. Die verbleibende(n) SH-Gruppe(n) können bei der späteren UV-initiierten radikalischen Polymerisation des Beschichtungsmittels, bei der sehr viel höhere Radikalkonzentrationen als bei der Herstellung der Verdicker entstehen, mit den übrigen vernetzenden Bestandteilen reagieren. Dadurch können die Verdickermoleküle kovalent in die Lackmatrix gebunden werden.

### (2) Mehrfunktionelle Acrylate bzw. Methacrylate als Vernetzer

Die vernetzenden Monomeren besitzen mindestens zwei polymerisationsfähige Einheiten z.B. Vinylgruppen pro Molekül (Vgl. Brandrup-Immergut, Polymer Handbook). Sie können in Mengen von 40 bis 80 Gew.-%, bevorzugt von 50 bis 70 Gew.-% verwendet werden.
Genannt seien die Diester und höheren Ester der Acryl- bzw. Methacrylsäure von mehrwertigen Alkoholen wie Glykol, Glycerin, Trimethylolethan, Trimethylolpropan, Pentaerythrit, Diglycerin, Dimethylolpropan, Ditrimethylolethan, Dipentaerythrit, Trimethylhexandiol-1,6, Cyclohexandiol-1,4.

Beispiele für derartige vernetzende Monomere sind u.a.
Ethylenglykoldiacrylat, Ethylenglykoldimethacrylat, Propylenglykoldiacrylat, Propylenglykoldimethacrylat, 1,3-Butandioldiacrylat, 1,3-Butandioldimethacylat, Neopentylglykoldiacrylat, Neopentylglykoldimethacrylat, Diethylenglykoldiacrylat, Diethylenglykoldimethacrylat, 4-Thio-heptanol-2,6-diacrylat, 4-Thioheptanol-2,6-dimethacrylat, Tetraethylenglykoldiacrylat, Tetraethylenglykoldimethacrylat, Pentandioldiacrylat, Pentandioldimethacrylat, Hexandioldiacrylat, Hexandioldimethacrylat, Trimethylolpropantri(meth)acrylat, Ditrimethylolpropantetraacrylat, Ditrimethylolpropantetramethacrylat, Dipentaerythrithexaacrylat und Dipentaerythrithexamethacrylat, Pentaerythrittriacrylat und Pentaerythrittetraacrylat.

Die mehrfunktionellen Acrylate bzw. Methacrylate können ebenso auch Oligomere oder Polymere sein, die ggf. noch weitere funktionelle Gruppen enthalten.

### (3) Verdünner

Als Verdünner können sowohl organische Lösungsmittel und/oder monofunktionelle Reaktiwerdünner verwendet werden.
Mit Hilfe der Verdünner wird eine Viskosität des Beschichtungsmittels im Bereich von ca. 10 bis ca. 250 mPa·s eingestellt. Für Beschichtungsmittel, die für Flut- oder Tauchbeschichtungen vorgesehen sind, sind eher niedrige Viskositäten von etwa 1 - 20 mPa·s gebräuchlich. Bei diesen Lacken können vor allem organische Lösungsmittel in Konzentrationen bis zu 75 Gew.-% eingesetzt werden. Für Rakelbeschichtungen oder Walzenauftragsbeschichtungen liegen die geeignete Viskositäten im Bereich von 20 bis 250 mPa·s. Die angegebenen Werte sind lediglich als Richtwerte zu verstehen und beziehen sich auf die Messung der Viskosität bei 20 °C mit einem Rotationsviscosimeter gemäß DIN 53 019.

Bei Lacken für Walzenauftragsverfahren werden bevorzugt monofunktionelle Reaktiwerdünner eingesetzt. Übliche Konzentrationen liegen zwischen 5 und 25 Gew.-%. Alternativ oder in Kombination können jedoch auch organische Lösungsmittel als Verdünner verwendet werden.

Die monofunktionellen Reaktiwerdünner tragen in Kombination mit dem Verdicker zu guten Verlaufseigenschaften des Lackes und damit zu einer guten Verarbeitbarkeit bei. Die monofunktionellen Reaktiwerdünner besitzen eine radikalisch polymerisierbare Gruppe, in der Regel eine Vinyl-Funktion. Geeignete monofunktionelle Reaktiwerdünner sind z.B. Butylacrylat, 2-Hydroxyethlyacrylat, 2-Hydroxyethylmethacrylat, Hydroxypropylacrylat, Hydroxypropylmethacrylat, 2-Ethoxy-methyethlymethacrylat oder 2,2,3,3-Tetrafluorpropylmethacrylat, Methylmethacrylat, tert-Butylmethacrylat, Isobornylmethacrylat.

In EP 035 272 werden gebräuchliche organische Lösungsmittel für Beschichtungsmittel für Kratzfestlacke beschrieben, die als Verdünner verwendet werden können. Geeignet sind z.B. Alkohole wie Ethanol, Isopropanol, n-Propanol, Isobutylalkohol und n-Butylalkohol. Ebenso können aromatische Lösungsmittel wie z.B Benzol, Toluol oder Xylol verwendet werden. Ketone wie z.B Aceton oder Methylethlyketon sind geeignet. Ebenso können Etherverbindungen wie Diethylether oder Esterverbindungen wie z.B. Ethylacetat, n-Butylacetat oder Ethlypropionat verwendet werden. Die Verbindungen können allein oder in Kombination eingesetzt werden.

### (4) UV-Initiator als Starter für die radikalische Polymerisation des Kratzfestlackes

Der UV-Initiator dient als Starter für die radikalische Polymerisation des Kratzfestlackes. Es handelt sich um Verbindungen, die unter UV-Einstrahlung Radikale abspalten und so die Polymerisation des Beschichtungsmittels initiieren. Gebräuchliche UV-Initiatoren sind gemäß der DE-OS 29 28 512 z.B. Benzoin, 2-Methylbenzoin, Benzoin-methyl-, -ethyl oder -butylether, Acetoin, Benzil, Benzil-dimethylketal oder Benzophenon. Übliche Verwendungsmengen in Kratzfestlacken sind 0,01 bis 10 Gew.-%.

### (5) Übliche Additive

Unter üblichen Additiven sollen für Beschichtungsmittel gebräuchliche Zusätze für Kratzfestbeschichtungen verstanden werden, die optional in Mengen von 0 - 20 Gew.-% enthalten sein können. Die Verwendung dieser Additive wird als nicht kritisch für die Erfindung angesehen. Hier sind z.B. oberflächenaktive Substanzen zu nennen, mit deren Hilfe die Oberflächenspannung der Beschichtungsformulierung reguliert und gute Auftrageigenschaften erreicht werden können. Hierfür können gemäß der EP 034 272 z.B. Silikone, wie verschiedene Polymethylsiloxane-Typen in Konzentrationen von 0,0001 bis 2 Gew.-% verwendet werden.

Ein weiteres, sehr gebräuchliches Additiv sind UV-Absorber, die in Konzentrationen von z.B. 2 bis 20 Gew.-%, vorzugsweise von 2 bis 8 Gew.-% enthalten sein können. UV-Absorber können z.B. aus der Gruppe der Hydroxybenzotriazole ausgewählt werden (siehe z.B. EP 247 480).

Das erfindungsgemäße Beschichtungsmittel ist zur Erzeugung kratzfester, witterungsbeständiger Beschichtungen auf Formkörpern aus thermoplastischem Kunststoff geeignet. Derartige Formkörper können beispielsweise aus Polymethylmethacrylat, Polycarbonat, Polystyrol, Polyvinylchlorid oder Acrylnitril/Butadien/Styrol-Copolymeren (ABS) bestehen. Bei den Formkörpern kann es sich um vakuumgeformte Teile, blasgeformte Teile, Spritzgußteile oder extrudierte Kunststoffteile handeln, die z. B. als Bauelemente im Freien, als Teile von Automobilen, Gehäuseteile, Bestandteile von Küchen oder Sanitäreinrichtungen verwendet werden.
Besonders geeignet sind die Beschichtungsmittel für massive, plane Platten und Stegdoppel- oder Stegmehrfachplatten, die im wesentlichen aus Polymethylmethacrylat bestehen, d.h. zumindestens 60 Gew.-% aus Methylmethacrylat-Monomeren bestehen und gegebenfalls Copolymeranteile aus Monomeren wie z.B. C1- bis C8-Alkylacrylaten oder Alkylmethacrylaten aufweisen. Übliche Abmessungen z.B. für massive Platten liegen im Bereich von 3 x 500 bis 2000 x 2000 bis 6000 mm (Dicke x Breite x Länge). Stegplatten können ca. 16 bis 32 mm dick sein.

Ebenfalls besonders geeignet sind die Beschichtungsmittel für massive, plane Platten und Stegdoppel- oder Stegmehrfachplatten, die im wesentlichen aus Polycarbonat bestehen, d.h. zumindestens 60 Gew.-% aus Bisphenol-A-Monomeren bestehen und gegebenenfalls Copolymeranteile aus Monomeren wie z.B. weitere Bisphenolen aufweisen.

Bei den genannten Kunststoffplatten aus Polymethylmethacrylat oder Polycarbonat kann es sinnvoll sein, nur eine teilweise Beschichtung, z. B. nur auf einer oder beiden Flächen, nicht aber an den Seiten, vorzunehmen.

Das Beschichtungsmittel soll so auf Kunststoffkörper aufgebracht werden, daß die Schichtdicke der ausgehärteten Schicht 1 bis 50 µm, bevorzugt 5 bis 30 µm beträgt. Bei Schichtdicken unter 1 µm ist der Bewitterungsschutz und die Kratzfestigkeit unzureichend, bei Schichtdicken von über 50 µm kann es zu Rißbildungen bei Biegebeanspruchung kommen. Geeignete Auftragsverfahren sind das Aufsprühen, Rakeln, Tauchen, Fluten oder das Walzenauftragsverfahren. Das erfindungsgemäße Beschichtungsmittel ist für alle genannten Verfahren geeignet, insbesondere jedoch für das Walzenauftragsverfahren, bei dem im allgemeinen Lacke mit höheren Viskositäten als bei den anderen Verfahren zur Anwendung kommen. Diese höheren Viskositäten können leicht mittels des polymeren Verdickers eingestellt werden.

Nach dem Auftragen des Lackfilms auf den Kunststoffkörper erfolgt die Polymerisation mittels UV-Strahlung. Die Polymerisation kann vorteilhaft unter inerter Atmosphäre zum Ausschluß des polymersationsinhibierenden Luftsauerstoffs, z.B. unter Stickstoffbegasung, durchgeführt werden. Dies ist jedoch keine unabdingbare Voraussetzung. Üblicherweise wird die Polymerisation bei Temperaturen unterhalb der Glastemperatur des Kunststoffkörpers vorgenommen. Die zum Aushärten notwendige UV-Bestrahlungsdauer hängt von der Temperatur und der chemischen Zusammensetzung des Beschichtungsmittels, von der Art und Leistung der UV-Quelle, von deren Abstand zum Beschichtungsmittel und davon ob eine Inertatmosphäre vorliegt ab. Als Richtwert können einige Sekunden bis wenige Minuten gelten. Die entsprechende UV-Quelle soll eine Strahlung im Bereich von ca. 150 bis 400 nm, bevorzugt mit einem Maximum zwischen 250 und 280 nm abgeben. Die eingestrahlte Energie soll ca. 50 - 2.000 mJ/cm² betragen. Als Richtwert für den Abstand der UV-Quelle zur Lackschicht können ca. 100 bis 200 mm angegeben werden.

### BEISPIELE

### Beispiel 1

Tabelle 1 zeigt eine verbesserte Haftung der erfindungsgemäßen Lacke 1.1 bis 1.6 auf Polymethylmethacrylat im Vergleich zu anderen Lacksystemen.

Eine Mischung aus [59 - 0,6 (x + y)] Teilen 1,6-Hexandioldiacrylat, [39 - 0,4 (x + y)] Teilen Pentaerythrittetraacrylat, x Teilen Verdicker, y Teilen Verdünner und 2 Teilen 1-(4-Isopropylphenyl)-2-hydroxy-2-methylpropan-1-on als Photoinitiator wird bis zur klaren Lösung gerührt und danach über einen Seitz-Tiefenfilter K 800 druckfiltriert. Anschließend wird mit einem Spiralrakel (12 µm Naßfilmdicke) auf eine auf ca. 38° C vorgewärmte Polymethylmethacrylat-Platte (PLEXIGLAS® 200 70 FF, Röhm GmbH, D-64293, Darmstadt, Deutschland) gerakelt und nach 2 Minuten Verlaufszeit unter einem Quecksilber-Hochdruckstrahler F450 (120 Watt/cm) der Firma Fusion unter Stickstoffatmosphäre im Abstand von 100 mm mit einer Geschwindigkeit 1m/min durchgefahren und dabei ausgehärtet.

Die Haftung nach Xenotest wurde durch Gitterschnittprüfung nach DIN 53 151 mit zusätzlich ausgeführtem Klebebandtest mit Tesafilm 4104 bestimmt, der in 500 h Intervallen ausgeführt wurde. Bei der jeweils angegebenen Stundenzahl wurde erstmalig ein Ablösen der Lackschicht nach Abzug des Klebebands festgestellt.

**Tabelle 1**

| **Lack** | **Verdicker** | **x [%]** | **Verdünner** | **y [%]** | **Haftung nach Xenotest** |
|---|---|---|---|---|---|
| 1.1 | A | 1 | BuA | 15 | 4 000 h |
| 1.2 | A | 2 | BuA | 15 | 4 000 h |
| 1.3 | A | 10 | BuA | 15 | 5 000 h |
| 1.4 | A | 10 | TPMA | 15 | 5 000 h |
| 1.5 | A | 20 | BuA | 15 | 5 000 h |
| 1.6 | A | 30 | BuA | 15 | 5 000 h |
| 1.7 | - | 0 | - | 0 | keine Anfangshaftung |
| 1.8 | - | 0 | BuA | 10 | 3 500 h |
| 1.9 | - | 0 | TPMA | 10 | 3 000 h |
| 1.10 | B | 10 | BuA | 15 | keine Anfangshaftung |
| 1.11 | B | 10 | TPMA | 15 | 2 000 h |
| A = erfindungsgemäßer Verdicker, hergestellt durch radikalische Polymerisation von 75 Gew.-% Methylmethacrylat, 20 Gew.-% Butylmethacrylat und 5 Gew.-% Pentaerythrittetrathioglycolat | | | | | |
| B= Hexafunktionelles aliphatisches Urethanacrylat | | | | | |
| BuA = Butylacrylat | | | | | |
| TPMA = 2,2,3,3-Tetrafluorpropylmethacrylat | | | | | |

### Beispiel 2

Tabelle 2 zeigt Kratzfestigkeits- (Taber-Test) bzw. Haftungswerte der erfindungsgemäßen Lacke 2.1 bis 2.5 auf Polycarbonat im Vergleich zu anderen Lacksystemen.

Eine Mischung aus [56 - 0,6 (x + y)] Teilen 1,6-Hexandioldiacrylat, [37 - 0,4 (x + y)] Teilen Pentaerythrittetraacrylat, x Teilen Verdicker, y Teilen co-Monomer, 5 Teilen eines UV-Absorbers (1,3-Bis(4-benzoyl-3-hydroxyphenoxy)-2-propylacrylat) und 2 Teilen 1-(4-Isopropylphenyl)-2-hydroxy-2-methylpropan-1-on als Photoinitiator wird bis zur klaren Lösung gerührt und danach über einen Seitz-Tiefenfilter K 800 druckfiltriert. Anschließend wird mit einem Spiralrakel (12 µm Naßfilmdicke) auf eine Polycarbonat-Platte (MAKROLON® 281, Röhm GmbH, D-64 293 Darmstadt) gerakelt und nach 2 Minuten Verlaufszeit mit einem Quecksilber-Hochdruckstrahler unter den Bedingungen wie im Beispiel 1 ausgehärtet.

Der Tabertest zur Bestimmung der Härte bzw. der Kratzfestigkeit wurde nach DIN 52 347 E ausgeführt, der Xenotest nach DIN 53 387. Die Haftung nach Xenotest wurde wie in Beispiel 1 bestimmt und angegeben. Die Viscositäten wurde mit einem Rotationsviskosimeter nach DIN 53 019 bei 20 °C bestimmt.

**Tabelle 2**

| **Lack** | **Verdicker** | **x [%]** | **Verdünner** | **y[%]** | **Taber-Test τ**_{**d-rel**}**[%]** | **Viscosität mPa s** | **Haftung nach Xenotest** |
|---|---|---|---|---|---|---|---|
| 2.1 | A | 1 | BuA | 15 | < 2 | 19.5 | 4 000 h |
| 2.2 | A | 2 | BuA | 15 | < 2 | 20,7 | 4 000 h |
| 2.3 | A | 10 | BuA | 15 | 3,0 | 36,6 | 5 000 h |
| 2.4 | A | 10 | TPMA | 15 | 1,7 | 26,9 | 4 000 h |
| 2.5 | A | 20 | BuA | 15 | 4,8 | 122 | 5 000 h |
| 2.6 | B | 10 | TPMA | 15 | 1,9 | 33,3 | 2 500 h |
| 2.7 | B | 10 | BuA | 15 | 2,7 | 21,0 | 1 500 h |
| 2.8 | C | 10 | TPMA | 15 | < 2 | 36,4 | 2 500 h |
| 2.9 | D | 10 | TPMA | 15 | < 2 | 27,2 | 2 500 h |
| 2.10 | E | 10 | TPMA | 15 | < 2 | 38,9 | 2 000 h |
| 2.11 | - | 0 | - | 0 | 1,5 | 25,2 | 3 500 h |
| 2.12 | - | 0 | BuA | 15 | 1,8 | 16,0 | 2 500 h |
| A = erfindungsgemäßer Verdicker, hergestellt durch radikalische Polymerisation von 75 Gew.-% Methylmethacrylat, 20 Gew.-% Butylmethacrylat und 5 Gew.-% Pentaerythrittetrathioglycolat | | | | | | | |
| B= Hexafunktionelles aliphatisches Urethanacrylat | | | | | | | |
| C = Bifunktionelles Epoxy-Acrylat | | | | | | | |
| D = Acryliertes Acrylpolymer | | | | | | | |
| E = Trifunktionelles aliphatisches Urethanacrylat, 85% in Hexandioldiacrylat | | | | | | | |
| BuA = Butylacrylat | | | | | | | |
| TPMA = 2,2,3,3-Tetrafluorpropylmethacrylat | | | | | | | |

### Beispiel 3

Tabelle 3 zeigt eine verminderte Abnahme der UV-Absorber-Konzentration beim erfindunggemäßen Lack 2.4 im Vergleich zu anderen herkömmlichen Lacksystemen. Die UV-härtbaren Lacke wurden wie in Beispiel 2 hergestellt. Der eingesetzte UV-Absorber ist abweichend von Beispiel 2 ein Reaktionsprodukt aus Methyl-3-[3-(2H-Benzotriazol-2-yl)-5-tert.butyl-4-hydroxyphenyl]propionat mit Polyethylenglykol 300 (durchschnittliches Molekulargewicht > 600). Die Lacke wurden auf UV-transparentes PLEXIGLAS® GS 2458 gerakelt und wie in Beispiel 1 mit einem Fusion-F450-Strahler ausgehärtet. Die bewitterungsbedingte relative Abnahme des UV-Absorbergehalts in der Lackschicht während des Xenotests wurde aus der Zunahme der gemittelten Transmissionswerte bei 320 nm und 360 nm abgeleitet.

**Tabelle 3**

| **Lack** | **Verdicker** | | **Verdünner** | **Xenotest, % UV-Absorber (0 h = 100%)** | | |
|---|---|---|---|---|---|---|
| | **Typ** | **%** | % | **500 h** | **1 000 h** | **2 500 h** |
| 2.1 | - | 0 | - | 81 | 59 | 24 |
| 2.2 | - | 0 | 15 % BuA | 63 | 44 | 18 |
| 2.3 | B | 10 | 15 % BuA | 65 | 43 | 13 |
| 2.4 | A | 10 | 15 % BuA | 86 | 73 | 40 |
| A = erfindungsgemäßer Verdicker, hergestellt durch radikalische Polymerisation von 75 Gew.-% Methylmethacrylat, 20 Gew.-% Butylmethacrylat und 5 Gew.-% Pentaerythrittetrathioglycolat | | | | | | |
| B= Hexafunktionelles aliphatisches Urethanacrylat | | | | | | |
| BuA = Butylacrylat | | | | | | |

## Patentansprüche

1. Beschichtungsmittel für Kratzfestbeschichtungen von Kunststoffkörpern bestehend aus
(1) 1 - 30 Gew.-% eines einpolymerisierbaren Präpolymerisats als Verdicker
(2) 20 - 80 Gew.-% mehrfunktioneller Acrylate und/oder mehrfunktioneller Methacrylate
(3) 5 - 75 Gew.-% eines Verdünners
(4) 0,01 - 10 Gew.-% eines UV-Initiators
(5) 0 - 20 Gew.-% üblicher Additive, insbesondere UV-Absorber
dadurch gekennzeichnet, daß
das Präpolymerisat (1) durch radikalische Polymerisation von
(a) 90 bis 99 Gew.-% von C₁ - bis C₈- Alkylestern der Acryl- oder Methacrylsäure und
(b) 1 bis 10 Gew.-% eines Schwefelreglers mit mindestens drei Thiol-Gruppen
erhalten wird.

2. Beschichtungsmittel nach Anspruch 1, dadurch gekennzeichnet, daß für das Präpolymerisat (1) Methylmethacrylat und Butylmethacrylat als Monomere (a) verwendet werden.

3. Beschichtungsmittel nach Anspruch 1 oder 2, dadurch gekennzeichnet, daß der Schwefelregler (b) vier Thiolgruppen im Molekül aufweist.

4. Beschichtungsmittel nach einem oder mehreren der Ansprüche 1 bis 3, dadurch gekennzeichnet, daß der Schwefelregler (b) Pentaerythrittetrathioglycolat ist.

5. Im wesentlichen aus Polymethylmethacrylat bestehende Kunststoffplatte, dadurch gekennzeichnet, daß sie zumindest teilweise mit einem ausgehärteten Beschichtungsmittel nach einem oder mehreren der Ansprüche 1 bis 4 beschichtet ist.

6. Im wesentlichen aus Polycarbonat bestehende Kunststoffplatte, dadurch gekennzeichnet, daß sie zumindest teilweise mit einem ausgehärtetem Beschichtungsmittel nach einem oder mehreren der Ansprüche 1 bis 4 beschichtet ist.

7. Verfahren zur Beschichtung von Kunststoffkörpern, dadurch gekennzeichnet, daß dazu ein Beschichtungsmittel nach einem der Ansprüche 1 bis 4 verwendet wird.

## Claims

1. A coating means for scratch-proof coatings of plastic items, comprising
(1) 1 - 30% by weight of a polymerisable prepolymer as a thickener
(2) 20 - 80% by weight of a poly-functional acrylate and/or a poly-functional methacrylate
(3) 5 - 75% by weight of a diluent
(4) 0.01 - 10% by weight of a UV initiator
(5) 0 - 20% by weight of common additives, especially UV absorbers.
characterised in that the prepolymer (1) is obtainable by radical polymerisation of
(a) 90 to 99% by weight of C₁ to C₈ alkyl acrylates or methacrylates, and
(b) 1 to 10% by weight of a sulphur regulator with at least three thiol groups.

2. A coating means according to claim 1, characterised in that methyl methacrylate and butyl methacrylate are used as monomers (a) for the prepolymer (1).

3. A coating means according to claims 1 or 2, characterised in that the sulphur regulator (b) has four thiol groups per molecule.

4. A coating means according to one or more of claims 1 to 3, characterised in that the sulphur regulator (b) is pentaerythritol tetrathioglycolate.

5. A plastic plate substantially comprising polymethyl methacrylate, characterised in that it is coated at least partially with a hardened coating means according to one or more of claims 1 to 4.

6. A plastic plate substantially comprising polycarbonate, characterised in that it is at least partially coated with a hardened coating means according to one of claims 1 to 4.

7. A process for the coating of plastic items, characterised in that a coating means according to one of claims 1 to 4 is used.

## Revendications

1. Agent de revêtement pour des revêtements résistants aux rayures de corps en matière plastique comprenant :
(1) 1-30 % en poids d'un prépolymère polymérisable
(2) constituant un épaississant,
(3) 20-80 % en poids d'acrylate polyfonctionnel et/ou de méthacrylate polyfonctionnel,
(4) 5-75 % en poids d'un diluant,
(5) 0,01-10 % en poids d'un initiateur U.V.,
(6) 0-20 % en poids d'un additif usuel notamment d'un agent absorbant les rayons U.V.,
caractérisé en ce que
le prépolymère (1) est obtenu par polymérisation radicalaire de :
(a) 90-99 en poids d'alkylesters en C₁-C₈ de l'acide acrylique ou méthacrylique et
(b) 1-10 % en poids d'un agent de régulation soufré comportant au moins trois groupes thiol.

2. Agent de revêtement selon la revendication 1,
caractérisé en ce que
pour obtenir le prépolymère (1) on utilise du méthylméthacrylate et du butylméthacrylate en tant que monomères (a).

3. Agent de revêtement selon la revendication 1 ou 2
caractérisé en ce que
l'agent de régulation soufré (b) comporte quatre groupes thiol dans sa molécule.

4. Agent de revêtement selon une ou plusieurs des revendications 1 à 3,
caractérisé en ce que
l'agent de régulation soufré (b) est du penthaérythritoltêtrathioglycolate.

5. Plaque en matière plastique constituée essentiellement de polyméthylméthacrylate,
caractérisée en ce qu'
elle est revêtue au moins en partie d'un agent de revêtement durcissable selon une ou plusieurs des revendications 1 à 4.

6. Plaque en matière plastique constituée essentiellement de polycarbonate,
caractérisée en ce qu'
elle est revêtue au moins en partie d'agent de revêtement durcissable selon une ou plusieurs des revendications 1 à 4.

7. Procédé de revêtement de corps en matière plastique,
caractérisé en ce qu'
on utilise un agent de revêtement selon l'une quelconque des revendications 1 à 4.
